# EUROPEAN PATENT APPLICATION

(11) **EP 1 553 572 A1**
(43) Date of publication of application: **13.07.2005**
(21) Application number: 04000214.9
(22) Date of filing: 08.01.2004
(51) Int. Cl.: G11B 7/095, G11B 7/09

(54) **Method for compensating deviations of an optical recording medium**

(71) Applicant: DEUTSCHE THOMSON-BRANDT GMBH, 78048 Villingen-Schwenningen (DE)
(72) Inventor: Mahr, Peter, 79669 Zell im Wiesental (DE); Schone, Wiebke, 78052 Villingen-Schwenningen (DE)
(74) Representative: Thies, Stephan

(57) **Abstract**

The present invention relates to a method for compensating deviations of an optical recording medium 1, and to an apparatus for reading from and/or writing to optical recording media using such method.

According to the invention, the method includes the steps of:
- detecting at least one type of deviations of the optical recording medium 1;
- storing deviation values;
- deriving a correction signal for the deviation from the stored deviation values during playback and/or recording of the optical recording medium; and
- updating the stored deviation values during playback and/or recording of the optical recording medium 1.

## Description

The present invention generally relates to a method for playback or recording of an optical recording medium. More specifically, it relates to a method for compensating deviations of an optical recording medium, and to an apparatus for reading from and/or writing to optical recording media using such method.

In many of today's applications large amounts of data need to be stored. In the area of consumer electronics and in addition in the area of Personal Computers optical recording media as removable storage media are commonly used for this purpose. Due to emerging incremental data bandwidth needs (HDTV, fast copy) the data throughput of the applications is increasing continuously. Consequently, the corresponding disk devices have to provide the appropriate data and data bandwidth, too. Therefore, a plurality of high density optical recording media have been developed, e.g. the Digital Versatile Disk (DVD) or the Blu-Ray Disk (BD) using blue laser light for reading and recording. To achieve high data rates, there further is a trend towards operating these optical recording media at high rotation speeds. However, the actuator of an apparatus for reading from and/or writing to optical recording media behaves like a second order spring-mass system. Therefore, with increasing rotation speed of the recording medium the sensitivity of the actuator decreases quadratically with the rotation speed of the recording medium. Thus, focusing on recording media exhibiting vertical deviations and tracking on eccentric recording media imposes a severe load on the servo loop of a high speed system for optical recording media. Furthermore, high speed operation also leads to higher requirements on a layer change process as well as on several other processes.

US 4,710,908 discloses an optical disk player having means for compensating for physical deviations caused by warp and surface deflections. On the disk N radial pitch intervals and M circumferential address positions are defined. Before recording on the recording medium the focus error signal values at these positions are detected and stored in a memory. The stored values are then used for controlling the laser power of a laser diode.

US 5,042,021 discloses an optical disk apparatus having means for correcting eccentricity. Prior to an actual reading or writing operation the eccentricity of the disk is determined. For this purpose the disk is divided into a plurality of sectors. For each sector a tracking deviation value is measured and stored in a memory. The stored values are then used for compensating eccentricity during playback or recording.

It is an object of the invention to propose a further method for compensating deviations of an optical recording medium. According to the invention, the method includes the steps of:
- detecting at least one type of deviations of the optical recording medium;
- storing deviation values;
- deriving a correction signal for the deviation from the stored deviation values during playback and/or recording of the optical recording medium; and
- updating the stored deviation values during playback and/or recording of the optical recording medium.
By deriving a correction signal it is possible to take some of the load from the servo loops, as the servo-loops no longer need to compensate for the deviations of the recording medium as well. They only need to compensate for the usual tracking and/or focusing deviations of the actuator. In addition, the method has the advantage that the deviation values are constantly updated. Therefore, it is not necessary to add a measuring phase at the beginning of the reading and/or recording process. Instead, the deviations are detected in real-time. If the deviation values change over the recording medium, the method automatically reacts to this variation and adapts the correction values. This is especially useful for multi-layer recording media, where prior art solutions need to determine the correction values separately for each layer before the reading and/or writing process. Therefore, the startup time is significantly reduced. Furthermore, due to filter functions the deviation is detected using several revolutions of the recording medium. The sensitivity is, therefore, higher and the method is more tolerant in case of a noisy signal. Malfunctions are avoided if while measuring the deviation values single disturbances such as black dots or interruptions occur. Typical deviations, which are compensated for, are tilt, warp, and eccentricity of the optical recording medium. While eccentricity is relevant for tracking and track jump, tilt and warp mainly affect the focusing during playback and/or recording and during layer changes. Therefore, the derived correction signal is advantageously also used during jumps between different layers of an optical recording medium.

Favorably, the deviation values are obtained from at least one servo loop needed for playback and/or recording of the optical recording medium. Vertical deviations such as tilt and warp are, for example, derived from the focus servo loop, while horizontal deviations such as eccentricity are derived from the tracking servo loop. Deriving the deviation values from the servo loops has the advantage that no additional sensor devices are necessary for detecting the deviations. Since the servo loops are available in any apparatus for reading from and/or writing to optical recording media, this reduces the implementation cost of the method.

Advantageously, a synchronization signal for the rotation of the optical recording medium is provided for synchronizing the updating of the stored deviation values and/or the deriving of the correction signal for the deviation from the stored deviation values with the rotation of the recording medium. This improves the operation with open servo loops, which is important when the method is used during layer changes or track jumps. In case one of the servo loops is opened, the updating of the corresponding stored deviation values is stopped. Otherwise it could occur that the deviation values are updated with incorrect values.

According to another aspect of the invention, a device for compensating deviations of an optical recording medium includes:
- means for detecting at least one type of deviations of the optical recording medium;
- means for storing deviation values;
- means for deriving a correction signal for the deviation from the stored deviation values during playback and/or recording of the optical recording medium; and
- means for updating the stored deviation values during playback and/or recording of the optical recording medium.
Such a device is suitable for performing the method for compensating deviations of an optical recording medium according to the invention and has, therefore, the same advantages.

Favorably, the means for detecting at least one type of deviations of the optical recording medium include at least one servo loop needed for playback and/or recording of the optical recording medium. In this way, since servo loops are available in any apparatus for reading from and/or writing to optical recording media, no further sensor devices like a dedicate eccentricity detector or a dedicate tilt detector are needed for detecting the deviations, which reduces the implementation cost.

Advantageously, the means for storing deviation values include a counter and a memory array. The counter increments the address input to the memory array in n steps per rotation of the recording medium based, for example, on rotation information from a motor. The counter is reset after completion of one rotation. Consequently, the number of pulses per rotation is equal to the number of memory cells in the memory array, i.e. the resolution of each deviation is given by n. Of course, for different types of deviation different resolution can be chosen. For example, if desired the tilt of the recording medium can be sampled with twice the resolution of the eccentricity etc.

Favorably, the means for deriving a correction signal for the deviation from the stored deviation values during playback and/or recording of the optical recording medium include a digital-to-analog converter and a low-pass filter. Since digital values are stored in the memory, these need to be transformed into analog signals for driving the actuator. The deviations of the recording medium are low frequency deviations. Therefore, by using a low-pass filter remaining portions of high frequency deviations, which are caused by the usual focusing and/or tracking deviations of the actuator, are efficiently removed. During operation, the values contained in the memory array are passed through the DA-converter and the low-pass filter and added to the output of a compensator of the servo loop by an adder. The obtained sum signal is then sent to the actuator.

Advantageously, the means for updating the stored deviation values during playback and/or recording of the optical recording medium include a comparator and a low-pass filter. The output of a compensator of a servo loop is sent to the comparator once directly and once through the low-pass filter. The result obtained by the comparator controls the activated memory cell of the memory array. If the output of the comparator is '1', the memory content is increased (+1). In case the output of the comparator is '0', the memory content is decreased (-1). Since the memory array is designed such that the n stored values are updated every rotation at the same location on the recording medium, after several revolutions the memory array contains an average of the deviation of the recording medium.

Favorably, an apparatus for reading from and/or writing to optical recording media performs a method or includes a device according to the invention for compensating deviations of an optical recording medium.

For a better understanding of the invention, an exemplary embodiment is specified in the following description with reference to the figures. It is understood that the invention is not limited to this exemplary embodiment and that specified features can also expediently be combined and/or modified without departing from the scope of the present invention. In the figures:
- Fig. 1: shows the actuator sensitivity in dependence on the rotation speed;
- Fig. 2: schematically depicts a focus loop implementing a method according to the invention;
- Fig. 3: shows the output of a compensator included in the focus loop;
- Fig. 4: depicts a jump between two layers of an optical recording medium free from vertical deviations; and
- Fig. 5: shows a jump between two layers of an optical recording medium exhibiting vertical deviations.

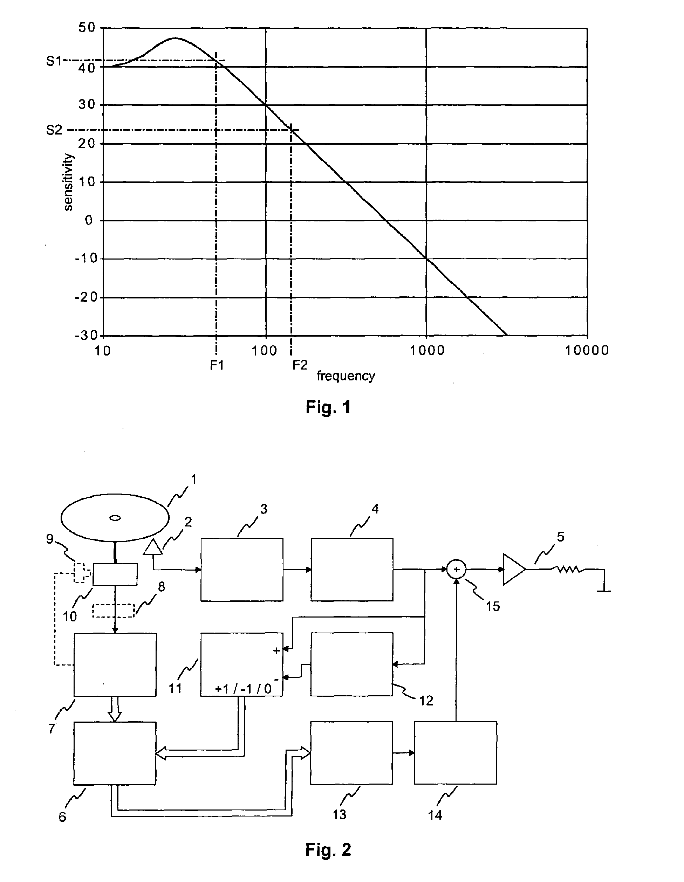

The actuator of an apparatus for reading from and/or writing to optical recording media behaves like a second order spring-mass system. Therefore, with increasing rotation speed of the recording medium the sensitivity of the actuator decreases quadratically with the rotation speed of the recording medium, which is depicted in Fig. 1. The figure shows a typical tracking/focus actuator response curve, i.e. sensitivity of the actuator versus rotation frequency. As an example the actuator sensitivities at 50 Hz, which equals a rotation speed of 5x standard DVD rotation speed, and at 150 Hz, which equals 15x standard DVD rotation speed are indicated. From the depicted graph it can be concluded that on actuator side the sensitivity decreases by a factor of 8.5. As a result, the distance which can be covered by the actuator at a constant input signal from a compensator 4 (cf. Fig. 2) decreases.

This non-linear decrease of the actuator sensitivity has an impact on the playability of a recording medium. Functions such as focusing, tracking, tilt or layer jump are affected. Especially on recording media exhibiting horizontal and/or vertical deviations, the actuator is in constant high motion in order to follow the tracks of the recording medium and to stay in focus. In a high speed drive for optical recording media, the sensitivity of the actuator, and therefore its motion range, is reduced to a minimum. Consequently, the actuator cannot cover the distance needed to stay in focus and follow the tracks.

The principle of the invention is to limit the compensator output of the drive to a small dynamic range which is covered by the actuator with a low sensitivity. Thus, the low frequencies of deviations are filtered out and hidden from the compensator, i.e. the compensator is operated as if the recording medium did not exhibit deviations.

Fig. 2 schematically depicts a focus loop implementing a method according to the invention. Implementations of the invention for tracking loops or other applications for the actuator are realized similarly and are within the scope of the invention.

An optical recording medium 1 is rotated by a motor 10. A pickup unit 2 reads data from and/or writes data to the recording medium 1. A focus control loop 3, 4 is used to control an actuator 5 for the pickup unit 2 in order to keep a light beam (not shown) used for reading and /or writing focused on the recording medium 1. In current drives the focus control loop consists of a focus error matrix (FE-matrix) 3, which sends a signal to a compensator 4 driving the actuator (focus coil) 5. According to the invention, a memory array 6 is added to support the control loop 3, 4. A counter 7 increments the address input to the memory array 6 in n steps per rotation of the recording medium 1 based on rotation information from the motor 10. A frequency generator or sensor, which generates a specific number of pulses per revolution of the motor 10, is therefore necessary for realizing the invention. However, such a sensor is generally present anyway for establishing a CAV-motor servo (VAC: Constant Angular Velocity). Favorably, an additional sensor 9 delivering only one pulse per revolution of the motor 10 is provided. With the aid of this pulse the stored deviation values are synchronized exactly with the rotation of the recording medium 1. Else, if the motor 10 was stopped, the synchronization would be lost. The system would then have to erase the stored deviation values and to acquire new values. Using the additional sensor 9, however, after one revolution at the latest the synchronization is achieved. Anyway, an open loop operation of the system is also possible without the additional sensor 9. The counter 7 is reset after completion of one rotation. Consequently, the number of pulses per rotation is equal to the number of memory cells in the memory array 6. The output of the compensator 4 is sent to a comparator 11 once directly and once through a low-pass filter 12. The result obtained by the comparator 11 controls the activated memory cell of the memory 6. If the output of the comparator 11 is '1', the memory content is increased (+1). In case the output of the comparator is '0', the memory content is decreased (-1). If the output of the comparator is 'no operation', i.e. the signals are equal, the memory content remains unchanged (0). Since the buffer memory 6 is designed such that the n stored values are updated every rotation at the same location on the recording medium 1, after several revolutions the memory 6 contains an average of the deviation of the recording medium 1. Of course it is likewise possible to increase/decrease the content of the memory 6 in steps greater than '1'. Consequently, the approximation of the waveform of the deviation is less accurate. However, the average is achieved faster then during the single step increment. This approach is useful upon startup.
The value contained in the memory array cell is passed through a DA-converter 13 and a low-pass filter 14 and added to the output of the compensator 4 by an adder 15. The obtained sum signal is sent to the actuator (focus coil) 5.
Optionally, a phase-locked loop 8 (PLL) is inserted between the frequency generator of the motor 10 and the counter 7 in order to increase the count frequency and therefore enhance the resolution of the deviation signal. The resolution attainable with the aid of the above described frequency generator depends on the design of the motor 10 and cannot be increased. If, for example, the frequency generator shall only generate twelve pulses per revolution, a motor with three lines and four magnetic poles is needed. In case the resolution is to be increased to 60 pulses per revolution, a PLL 8 with a multiplying factor of five is inserted. Alternatively, a separate frequency generator is provided, e.g. a light barrier with a coding disc. This solution makes the resolution independent of the employed motor, but it leads to additional hardware and costs.

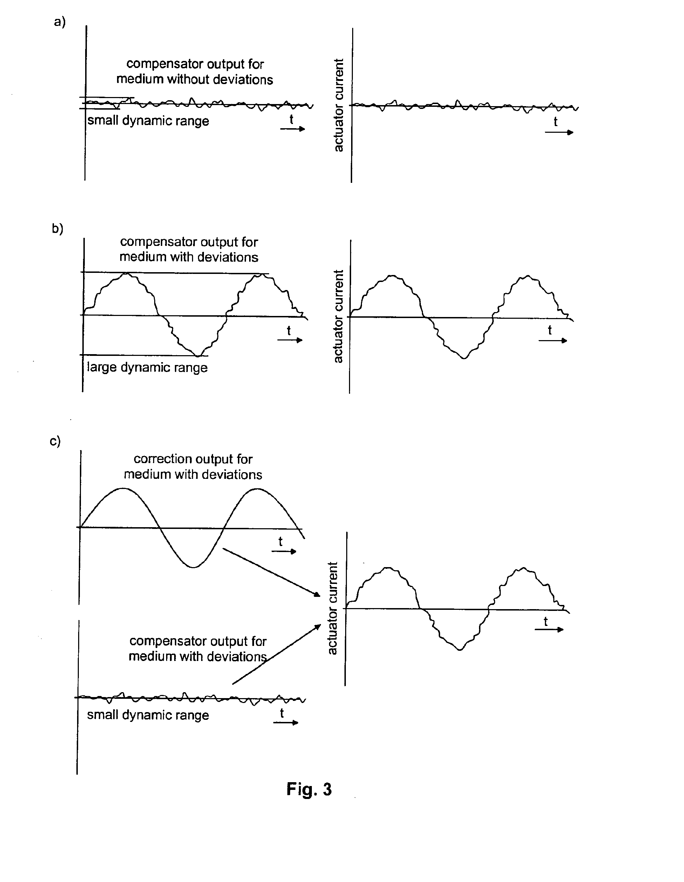

In Fig. 3 the time dependent behavior of the output signal of the compensator 4 and the corresponding actuator current is shown for different situations.
Diagram a) depicts the output signal of the compensator 4 and the corresponding actuator current for a flat recording medium 1, i.e. a recording medium which does not exhibit deviations. The signals show a low dynamic caused by the small deviations from the optimum focusing conditions, which can be coped with by the servo loop even with a low sensitivity.
Diagram b) depicts the output signal of the compensator 4 and the corresponding actuator current for a recording medium exhibiting a vertical deviation. Superimposed on the low dynamic caused by the small deviations from the optimum focusing conditions is a low frequency high dynamic caused by the periodical vertical deviation of the recording medium. This leads to a high dynamic, which cannot properly be coped with by the servo loop.
The solution according to the invention is explained in diagram c). The low frequency high dynamic caused by the periodical vertical deviation of the recording medium is filtered, so that the output signal of the compensator 4 equals that for a flat recording medium. Thus, the servo loop only has to cope with a low dynamic. In order to compensate for the vertical deviation of the recording medium, a correction output (shown in the top-left graph of diagram c)) is added to the output signal of the compensator 4. The resulting actuator current then has the desired time dependent behavior.

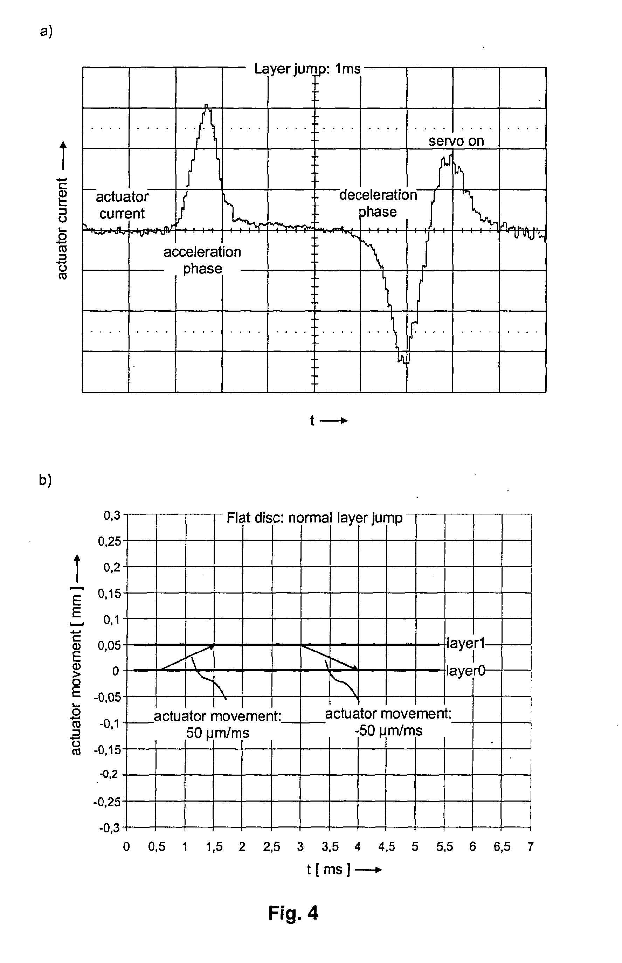

Figure 4 depicts a jump between two layers of an optical recording medium free from vertical deviations. The graph a) illustrates the so-called S-curve, showing the actuator current in dependence of time at a layer change. The jump is initiated with an acceleration phase and ends with a deceleration phase. During the jump the focus servo loop is open. At the end of the jump the focus servo loop is closed again.

The movement of the actuator 5 at the layer change is depicted in graph b). It can be seen that the actuator 5 moves from one layer to the other layer with a constant velocity of approximately 50 mm/s. Note that the angle of incidence between the aimed layer and the movement curve of the actuator 5 is 45°. The angle of incidence is kept small in order to simplify the locking on to the aimed layer. The smaller the angle, the less the actuator 5 has to change its movement direction, which results in a less complicated locking to the layer.

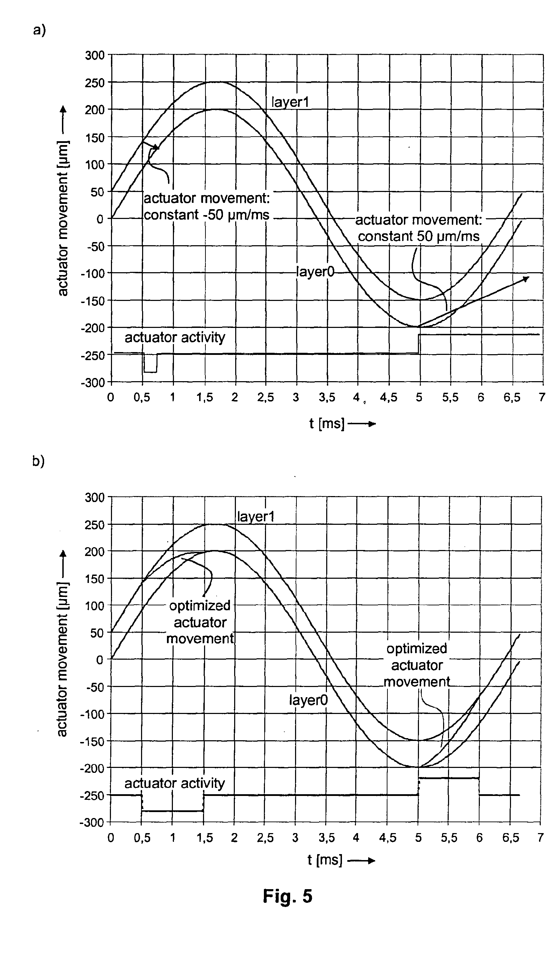

Fig. 5 shows a jump between two layers of an optical recording medium exhibiting vertical deviations. Graph a) illustrates some of the problems associated with a layer change on an optical recording medium exhibiting vertical deviations. In graph b) the improvement achieved by the invention for the layer change is demonstrated.
As can be seen in graph a), in a conventional drive for optical recording media the actuator 5 moves with a constant velocity. This lead to a plurality of problems in case an optical recording medium exhibits vertical deviations:
- The time for the layer changing process differs for each layer change in dependence on the deviation and the starting point of the layer change.
- Due to the deviation, there is a risk not to lock on the aimed layer, but on the starting layer, which is the case for the second layer change of Fig. 5a).
- The angle of incidence not only differs for every layer change, but it also can reach a value of up to 90°. This complicates the layer change, since the actuator 5 is forced to radically change its direction in order to follow the layer.
- The faster the recording medium is rotated, the lower becomes the sensitivity of the actuator 5.
Besides improving focusing and tracking the invention also improves the layer change process. Since the correction movement for compensating the vertical deviations is superimposed on the linear layer change movement of the actuator 5, the overall movement of the actuator 5 is non-linear and the actuator 5 converges smoothly to the aimed layer with a small angle of incidence.

The invention is not only applicable to closed loop activities as described above, but also to open loop procedures such as seeking (tracking) or recovery from standby mode (focusing). Regarding open loop procedures, the advantages for focusing concern conditions like focus lost/focus off, tilt or recovery from standby. In each of the situations, the laser is not in focus, but focus has to be recovered very quickly. In these situations, due to the memory array 6, the actuator 5 already obtains data from the correction output which allows to follow the deviation of the recording medium 1. Of course, it is necessary to turn off the update function of the memory array 6 as soon as the focus loop is opened.
For tracking, the main advantage of the invention concerns the improvement of the seeking procedure. As described in the last passage for the focusing procedure, also in this situation the actuator 5 obtains data from the correction output and is able to follow the deviation of the recording medium 1. Again, the update function of the memory array 6 has to be turned off as soon as the tracking loop is opened.

Especially for the open loop operations it is useful to provide a synchronization pulse indicating a specific position of the recording medium 1 to the memory array 6. In this way the restart performance (standby, focus lost, seeking) for tracking and focusing is increased, as the output of the memory array 6 automatically adapts to the correct location within the stored deviation waveform after synchronization.

## Claims

1. Method for compensating deviations of an optical recording medium (1), including the steps of:
- detecting at least one type of deviations of the optical recording medium (1);
- storing deviation values; and
- deriving a correction signal for the deviation from the stored deviation values during playback and/or recording of the optical recording medium,
**characterized in that** it further includes the step of
- updating the stored deviation values during playback and/or recording of the optical recording medium (1).

2. Method according to claim 1, further comprising the step of using the derived correction signal during jumps between different layers of the optical recording medium (1).

3. Method according to claim 1 or 2, **characterized in that** the deviation values are obtained from at least one servo loop needed for playback and/or recording of the optical recording medium (1).

4. Method according to one of claims 1 to 3, **further** including the step of providing a synchronization signal for the rotation of the optical recording medium (1) for synchronizing the updating of the stored deviation values and/or the deriving of the correction signal for the deviation from the stored deviation values with the rotation of the recording medium (1).

5. Method according to one of claims 1 to 4, further including the step of stopping the updating of at least some of the stored deviation values during playback and/or recording of the optical recording medium (1) in case a servo loop needed for playback and/or recording of the optical recording medium 1 is opened.

6. Method according to one of claims 1 to 5, **characterized in that** the stored deviation values are indicative of at least one of tilt, warp, and eccentricity of the optical recording medium (1) .

7. Device for compensating deviations of an optical recording medium (1), including:
- means (3, 4) for detecting at least one type of deviations of the optical recording medium (1);
- means (6, 7) for storing deviation values; and
- means (13, 14) for deriving a correction signal for the deviation from the stored deviation values during playback and/or recording of the optical recording medium,
**characterized in that** it further includes
- means (11, 12) for updating the stored deviation values during playback and/or recording of the optical recording medium (1).

8. Device according to claim 7, **characterized in that** the derived correction signal is used during jumps between different layers of the optical recording medium (1).

9. Device according to claim 7 or 8, **characterized in that** the means (3, 4) for detecting at least one type of deviations of the optical recording medium (1) include at least one servo loop (3, 4) needed for playback and/or recording of the optical recording medium (1).

10. Device according to one of claims 7 to 9, **characterized in that** the means (6, 7) for storing deviation values include a counter (7) and a memory array (6).

11. Device according to one of claims 7 to 10, **characterized in that** the means (13, 14) for deriving a correction signal for the deviation from the stored deviation values during playback and/or recording of the optical recording medium include a digital-to-analog converter (13) and a low-pass filter (14).

12. Device according to one of claims 7 to 11, **characterized in that** the means (11, 12) for updating the stored deviation values during playback and/or recording of the optical recording medium 1 include a comparator (11) and a low-pass filter (12).

13. Device according to one of claims 7 to 12, **characterized in that** the stored deviation values are indicative of at least one of tilt, warp, and eccentricity of the optical recording medium (1).

14. Apparatus for reading from and/or writing to optical recording media, **characterized in that** it performs a method according to one of claims 1 to 6 or includes a device according to one of claims 7-13 for compensating deviations of an optical recording medium (1).
